# EUROPEAN PATENT SPECIFICATION

(11) **EP 0 690 759 B1**
(45) Date of publication and mention of the grant of the patent: **30.07.1997**
(21) Application number: 92924983.7
(22) Date of filing: 26.11.1992
(51) Int. Cl.: B23D 63/16

(54) **MARKER FOR AN AUTOMATIC SAW CHAIN SHARPENER, INDICATING A COMPLETED GRINDING CYCLE**
MARKIERER FÜR EINE AUTOMATISCHE SÄGEKETTENSCHARFVORRICHTUNG DER DAS ENDE EINES SCHARFZYKLUS ANGIBT
MARQUEUR POUR AFFUTEUSE AUTOMATIQUE DE CHAINE DE TRON ONNEUSE, INDIQUANT LA FIN D'UN CYCLE D'AFFUTAGE

(30) Priority: 26.11.1991 SE 9103496
(43) Date of publication of application: 10.01.1996
(73) Proprietor: MARKUSSON, Pär Mikael, S-762 00 Rimbo (SE)
(72) Inventor: MARKUSSON, Pär Mikael, S-762 00 Rimbo (SE)
(74) Representative: Baumbach, Thorkild
(86) International application number: SE9200820
(87) International publication number: WO9310931

(56) References cited:
- DE-A- 3 507 054
- US-A- 4 102 223

## Description

The present invention relates to an arrangement in an automatic saw chain grinder of the kind which includes a chain support and means for automatically controlled, stepwise forward feeding of a row of saw chain cutter links of both right hand and left hand types of a saw chain to a predetermined grinding location on said chain support and a grinding machine moveable relative to the chain support which machine is automatically controlled by the means, for grinding the cutting edge of a cutter link positioned in said grinding location, and which grinding machine in a first position is arranged to grind right hand links and in a second position left hand links, said grinding location being defined by a first end position of a feeder pin which can be moved between two end positions, against which pin a cutter link by means of its rear edge is resting in grinding position; see e.g. US-A 4 102 223.

### BACKGROUND PRIOR ART

The saw chains used in different types of motor saws have a common feature that they comprise different types of links of which certain require sharpening or grinding and are called cutter links and exists in two different types, right hand- and left hand links, the teeth of which are provided with cutting edges which have to be ground by means of a grinding machine having a setting adjusted to the respective type of link in order to achieve an optimum cutting effect. Seated forwardly of the cutting tooth of those link configurations is an extra tooth or depth gauge. The length of which sometimes has to be adjusted but which normally is not ground at the same time as the cutting teeth. The cutter links of a saw chain are normally separated by a spacing link or drive link such that each alternate cutter link is a right hand link and each other cutter link is a left hand link. The majority of automatic saw chain grinders are constructed to grind each alternate cutter link with the grinding wheel in a first setting, for instance the right hand links, and then to grind the intermediate links, that is the left hand links, with the grinding wheel in a second setting. However, when joining together the ends of saw chains, for instance after having adjusted the length thereof, it often happens that cutter links of the same type will end up side by side which causes problem when grinding such chain in automatic grinders. If the links of the same type arranged side by side are not detected, the links after the joining position will be ground incorrectly and the saw chain will be destroyed.

Different solutions for avoiding such incorrect grindings are known. Thus, the feeding means or the like of a saw chain grinder could be provided with some form of detector means arranged to detect when a cutter link to be ground is passing and which releases measures from a control and or feeding means, which measures are intended to bring the corresponding cutter link into grinding location and start the grinding. If two links of the same type follow after each other the grinding machine will be stopped. According to another method the saw chain grinder is provided with a counter, which has been set in order to stop the grinding after a certain number of links have been ground, at which method the operator before the grinding procedure starts has to count the number of links to be ground.

The common feature to known automatic saw chain grinders is that they have some kind of electronic control means, which either detects that the cutter link in grinding location corresponds to the setting of the grinding machine or detects and counts the number of grinding operations and stops the grinding when a preset number of grindings have been carried out. The electronic control means are sensitive and the corresponding detector means are positioned in a hostile environment polluted by grinding dust.

### SUMMARY OF THE INVENTION

The object of the present invention is to provide an arrangement which makes it possible to use a completely mechanical control means thus eliminating the need of an electronic control means with corresponding detector means. A further object is to eliminate the need for a counter and the counting of cutter links necessary for the setting of the counter. These objects will be achieved by means of an arrangement having the characteristics of the enclosed patent claims.

### BRIEF DESCRIPTION OF THE DRAWINGS

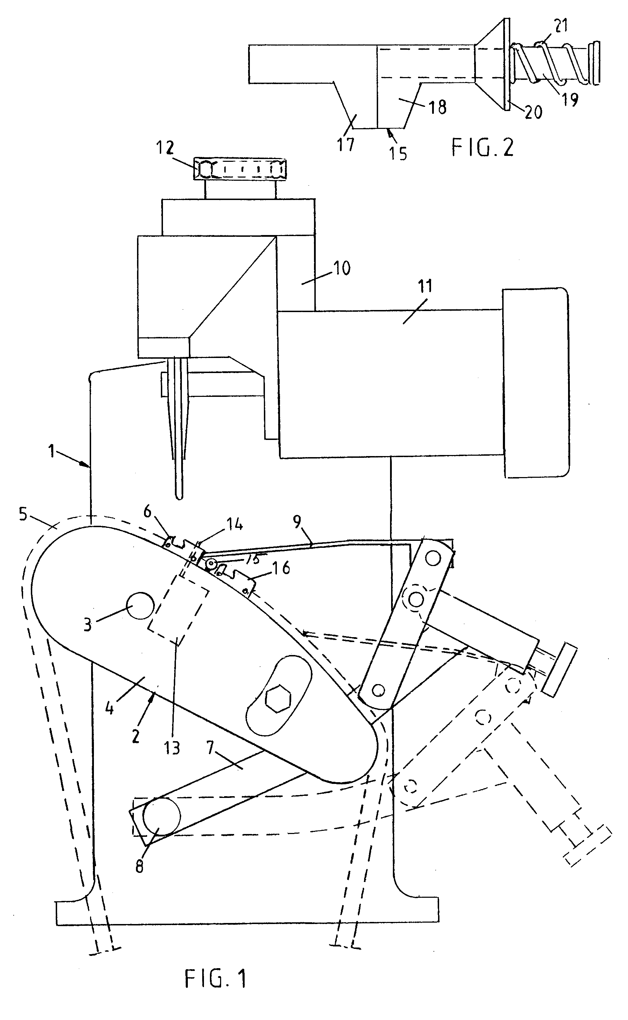

The invention will be described more in detail with reference to the enclosed drawing on which Figure 1 shows an automatic saw chain grinder in a front view according to an embodiment chosen as an example of the invention and Figure 2 shows a link marking devise in larger scale.

### DESCRIPTION OF PREFERRED EMBODIMENT

The saw chain grinder shown in Figure 1 comprises a support 1 intended to be placed on a working bench or on a carrying column. The support carries a chain support 2 rotatable around the shaft 3 for adjusting the front angle of the cutting edges at the grinding of the cutter links. The chain support 2 comprises plates arranged in parallel to each other and on a certain distance from each other of which plates the front one 4 is shown in the Figure and between which plates a longitudinal slot for the guiding teeth of the saw chains is created. One of the plates of the chain support is moveable and could by means of a lever, which is not shown, actuated by means of a cam on a cam shaft, which is also not shown, being driven by a separate motor, be pressed against the fixed chain support plate in order to grip a cutter link 6 in the grinding location. In the support a shaft 8 is journalled carrying an arm 7 with an adjustably arranged feeder pin 9. The feeder pin 9 moves actuated by means of a second cam on said cam shaft, not shown, between two end positions, in a first one of which, shown with solid lines, a cutter link 6 by means of the feeder pin has been put in grinding location. In a second end position, shown with broken lines, the feeder pin is in a position to catch behind the next cutter link, not shown.

A grinding machine 11 is rotatably arranged on a column 10 which is vertically adjustable between two end positions in the support. The grinding machine 11 is released and locked by means of the handle 12 when turning the machine and adjusting the grinding angle of the links. The vertical adjustment of the column 10 is controlled by a third cam on said third cam shaft, not shown, and the end positions of the movement can be adjusted for setting of the grinding depth.

Between the chain support 2 and the support 1 a micro switch 13 is arranged in such a way that its detector means 14 protrude over the links of the saw chain 5. By means of the arrangement of a marker device 15 on the saw chain which protrudes at the side of the chain and which at the movement of the chain could act on the detector means 14 of the micro switch 13, the grinding procedure could be interrupted with a saw chain in a decided position while the current to both the grinding and cam shaft motors are controlled by the micro switch.

When grinding a saw chain comprising two adjacent cutter links of the same type the marking device 15 is placed between these links and the link after the marking device in the direction of the movement, in this case link 16, will first be ground. When the last link 6 has been ground the marking device 15 will at one further feeding movement of the chain act on the micro switch and disconnect the saw chain grinder in order to avoid an incorrect grinding of the following links.

In Figure 2 is shown in larger scale one embodiment of the marking device 15 which comprises to jaws 17, 18, one of which, 18, is slideably arranged on a pin 19, and is pressed by means of the spring 21 against the other jaw 17. By means of a flange 20 the jaws can easily be parted at the application of the marking device on a saw chain.

## Claims

1. An arrangement in an automatic saw chain grinder of the kind which includes a chain support (2) and means for automatically controlled, stepwise forward feeding of a row of saw chain cutter links of both right hand and left hand types of a saw chain (5) to a predetermined grinding location on said chain support (2) and a grinding machine (11) moveable relative to the chain support which machine is automatically controlled by the means, for grinding the cutting edge of a cutter link (6) positioned in said grinding location, and which grinding machine in a first position is arranged to grind right hand links and in a second position left hand links, said grinding location being defined by a first end position of a feeder pin (9) which can be moved between two end positions, against which pin a cutter link (6) by means of its rear edge is resting in grinding position, characterised in that the arrangement comprises at least one breaking means (13) with detecting means (14) arranged at the grinding location, which when actuated by means of a marker device (15) mounted on the saw chain (5) is arranged to stop the movement of the feeding pin (9) as well as the grinding machine (11), the marker device (15) being intended, when adjacent links (6, 16) of the same type occur, to be mounted between the same, whereby an automatic grinding of all the links of the saw chain corresponding to the setting of the grinding machine will be possible and the risk of incorrect grinding is eliminated.

## Patentansprüche

1. Vorrichtung in einem automatischen Kettensägenschleifer, der einen Kettenträger (2) und Mittel für den automatisch gesteuerten schrittweisen Vorschub einer Reihe von nach links und rechts gebogenen Sägezähnen einer Sägekette (5) zu einer vorgegebenen Schleifposition auf dem besagten Kettenträger (2) sowie eine Schleifmaschine (11) aufweist, die relativ zum Kettenträger beweglich angeordnet ist und durch die Mittel automatisch gesteuert wird, um das Schleifen der Schneide des Sägezahns (6) in der vorgegebenen Schleifposition durchzuführen, wobei die Schleifmaschine in einer ersten Position so angeordnet ist, daß die nach rechts gebogenen Sägezähne geschliffen werden, während in einer zweiten Position der Schleifmaschine die nach links gebogenen Sägezähne geschliffen werden, wobei die besagte Schleifposition durch eine erste Anschlagstellung einer Zuführungsstange (9) definiert wird, die zwischen zwei Anschlagstellungen hin- und herbewegt werden kann, wobei sich gegen diese Stange in der Schleifposition ein Sägezahn (6) mit seiner Hinterkante abstützt; dadurch gekennzeichnet, daß die Anordnung mindestens einen Unterbrecher (13) mit einem Detektor (14) im Bereich der Schleifposition aufweist, wobei eine Betätigung über einen Marker (15) erfolgt, der an der Sägekette (5) angebracht ist und die Bewegung der Zuführungsstange (9) und der Schleifmaschine (11) stoppt, und wobei der Marker (15), wenn zwei benachbarte Sägezähne (6, 16) des gleichen Typs bzw. mit gleicher Biegerichtung aufeinanderfolgen, dann zwischen diesen beiden Sägezähnen angebracht wird, so daß ein automatisches Schleifen aller. Sägezähne der Sägekette entsprechend der Einstellung der Schleifmaschine möglich ist, ohne daß die Gefahr des falschen Schliffs eines Sägezahns besteht.

## Revendications

1. Dispositif pour une affûteuse automatique de chaîne de tronçonneuse du type comprenant un support de chaîne (2) et des éléments permettant l'alimentation automatiquement régulée, vers l'avant et par étapes, d'une rangée de maillons coupants de chaîne de tronçonneuse, à la fois pour une chaîne de tronçonneuse (5) du type coupant à droite et pour une chaîne de tronçonneuse (5) du type coupant à gauche, vers un emplacement d'affûtage prédéterminé sur le support de chaîne (2), ainsi qu'une affûteuse (11) mobile par rapport au support de chaîne et commandée automatiquement par ces éléments, de manière à affûter le bord de coupe d'un maillon coupant (6) positionné dans l'emplacement d'affûtage, cette affûteuse étant agencée de façon à affûter des maillons de droite dans une première position, et des maillons de gauche dans une seconde position, l'emplacement d'affûtage étant défini par une première position extrême d'une cheville d'alimentation (9) pouvant être déplacée entre deux positions extrêmes, et contre laquelle le bord arrière d'un maillon de coupe (6) vient se placer dans la position d'affûtage,
caractérisé en ce que
le dispositif comprend au moins un élément de déconnexion (13) muni de détecteurs (14), disposé au niveau de l'emplacement d'affûtage et qui, lorsqu'il est activé par l'intermédiaire d'un dispositif de marquage (15) monté sur la chaîne (5), permet de stopper le mouvement de la cheville d'alimentation (9) ainsi que celui de l'affûteuse (11), le dispositif de marquage (15) étant conçu pour être monté entre des maillons adjacents (6, 16) de même type, là où ils sont présents, de façon à permettre un affûtage automatique de tous les maillons de la chaîne de tronçonneuse en fonction du réglage de l'affûteuse, et de façon à supprimer tout risque d'affûtage incorrect.
